# EUROPEAN PATENT SPECIFICATION

(11) **EP 1 401 258 B1**
(45) Date of publication and mention of the grant of the patent: **15.08.2007**
(21) Application number: 02727625.2
(22) Date of filing: 28.05.2002
(51) Int. Cl.: A01G 23/08

(54) **FELLING HEAD**
FÄLLKOPF
TETE D'ABATTAGE

(30) Priority: 30.05.2001 FI 20011127
(43) Date of publication of application: 31.03.2004
(73) Proprietor: Stenberg, Harri, 58200 Kerimäki (FI)
(72) Inventor: Stenberg, Harri, 58200 Kerimäki (FI)
(74) Representative: Pitkänen, Hannu Alpo Antero
(86) International application number: PCT/FI2002/000458
(87) International publication number: WO 2002/096188

(56) References cited:
- WO-A1-84/03813
- US-A- 3 871 427
- DATABASE WPI Week 198427, Derwent Publications Ltd., London, GB; AN 1984-169212, XP002970652 & SU 1 049 012 A (FOREST POWER MECHN INST) 23 October 1983

## Description

The present invention relates to a harvesting head, with a frame to which gripping elements and a sawing device have been attached in order to cut tree trunks, wherein the harvesting head includes at least one stopper attached movable to the frame to prevent the sawing device touching the ground. Such a device is known e.g. from document WO 84/03813 A1.

Many different kinds of felling and harvester heads to be attached to a head of a jointed boom of a multi-function machine or corresponding to it are known today. By means of those it has been succeeded to make the felling and handling of trees much more quick and easy recently. Thus is the felling of trees by using a multi-function machine remarkable easy and quick in comparison with, for example, felling and delimbing by means of a traditional chain saw. Using of a multi-function machine in slopes and/or on an uneven terrain is naturally slower and more difficult than on even areas. One reason to this is the fact that it is much more difficult to set a harvesting head to a suitable height to a butt of a tree on an uneven terrain than on even areas. Usually the cutting radius of a blade of a sawing device is much larger than the thickness of a trunk of.a tree. Furthermore, usually it is impossible to see behind the tree and the harvesting head. This is why it is impossible to know while cutting a tree whether there are obstacles, such as stones, reaching the height of the blade from the ground behind the tree, to which the blade while sawing hits. Damaging of a blade due to this kind of sawing to an obstacle in the ground is very common problem while felling trees in an uneven terrain. This has been tried to minimize by choosing the sawing point in an uneven terrain or in slopes high enough to be quite sure that likelihood of obstacles out of sight behind a tree and a harvester head is smaller. Naturally this is not a reasonable solution from forestry management viewpoint to prevent the damaging of the blade, because it diminishes the amount of wood from a certain forest stand and thus worsens the profitability of felling.

The object of the invention is to provide a harvesting head with which earlier mentioned problems are eliminated. Especially, the object of the invention is to provide a harvesting head while using which the sawing to the ground or to an obstacle in the ground is prevented, and by means of which the choice making of the cutting point is easier and quicker than earlier. Furthermore, the object of the invention is to provide a harvesting head, in which the prevention of cutting to the ground has been realized simply and advantageously and not disturbing the functioning of other appliances and the use of the harvesting head.

The object of the invention is accomplished by a harvesting head, the characteristics of which are presented in the claims.

By means of the stopper the placing of the harvesting head against the butt of a tree such that there would be an obstacle behind the tree higher than the blade which the blade could hit while cutting the tree is prevented simply and reliably. Furthermore, by means of a stopper like this it is much easier and quicker than earlier to choose the cutting point in hilly and/or uneven terrain because due to a stopper it is possible to place the harvesting head to the butt of a tree easy and quickly without the risk of sawing to the ground or to an obstacle in the ground.

Characteristic to the harvesting head in accordance with the invention is the fact, that the stopper includes a supporting part to be placed against the ground and an actuator to move the supporting part. This kind of a stopper is of relatively small size, reliable in functioning and simple and does not prevent the other equipment and the use of the harvesting head from functioning.

In the second advantageous application of the invention the stopper has been placed on the opposite side of the sawing device on the side of the frame. In a stopper placed such a relatively small and simple mechanical supporting part may be used, which prevents the placing of the harvesting head too low in the butt of a tree, when the risk to saw to the ground is great. Such placed stopper may easily be manufactured economically though reliably to function.

In the third advantageous application of the invention there is a base part in the lower part of the supporting part to support the supporting part against the ground during sawing. By means of the base part the supporting part is made to touch the ground on the whole area of the size of the motion area of the blade of the sawing device. This way it is simply and reliably prevented that some obstacle on the motion area and on the height of the blade stays outside the supporting part and the blade hits the obstacle in spite of the stopper.

In the fourth advantageous application of the invention the stopper includes an attaching part in order to attach the stopper to the frame of the harvesting head as well as the supporting part has been attached to the attaching part movable mainly vertically in respect with the harvesting head. This way the stopper and its supporting part, which is to be moved with an actuator may be attached to the frame of the harvesting head in a functional way long-lasting, simply and advantageously.

In the fifth advantageous application of the invention the actuator is an actuator of linear motion, such as a hydraulic cylinder, which has been attached to the upper part of the attaching part, and which moving end has been attached to the upper part of the supporting part in order to move the supporting part by means of the actuator. This kind of an actuator is simple and easy to connect with the hydraulic harvesting head and this way the actuator and the supporting part are able to be placed together with the harvesting head requiring little space and not disturbing the use of the harvesting head.

In the sixth advantageous application of the invention the harvesting head includes controlling equipment to control the motion of the actuator. Furthermore, the controlling equipment has been organized to prevent the sawing device from functioning if the supporting part has not been moved away from the front of the sawing device while cutting the tree. This way the stopper is made easily and simply to function automatically in accordance with the other functioning of the sawing device and the harvesting head. Furthermore, thus is reliably and advantageously prevented the sawing with a sawing device to the supporting part. Furthermore, by means of controlling equipment functioning this way the sawing to the ground or to an obstacle in the ground due to malfunctioning of the stopper is prevented.

In the seventh advantageous application of the invention the actuator is a double-acting hydraulic cylinder and the controlling equipment are guide valves controlling the actuator in accordance with the functioning of the sawing device. This kind of an actuator and controlling equipment are of small size and reliable in functioning as well as easy and advantageous to connect with the hydraulic harvesting head.

Next, the invention will be explained in more detail with reference to the accompanying drawings, in which,
Figure 1 illustrates the perspective figure of a harvesting head in accordance with the invention,
Figure 2 illustrates the harvesting head in accordance with the figure 1 while against a tree before starting the sawing, and
Figure 3 illustrates the harvesting head in accordance with the figures 1 and 2 while against a tree during the sawing.

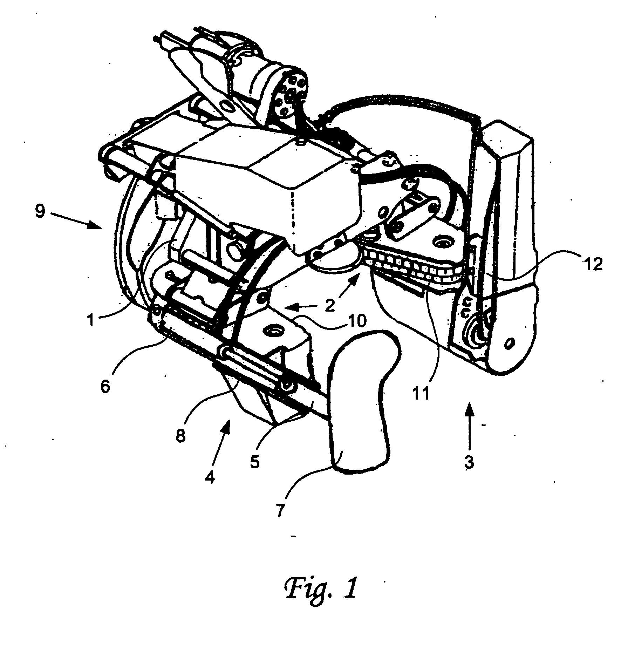

The application in figures 1-3 illustrates a harvester-type harvesting head attached to an end of a jointed boom of a multi-function machine or corresponding. Therefore by means of it trees may be felled as well as delimbed with it. The harvesting head includes a frame 1 with gripping elements 2, a sawing device 3 and delimbing knives 9 manufactured in recognized way attached to it. Furthermore, the harvesting head in accordance with the figures 1-3 includes a stopper 4 fixed to the frame 1 on the opposite side of the sawing device 3 to prevent from sawing to the ground or to an obstacle in the ground.

The sawing device is a chain saw, the blade of which is a saw flange protected with a blade casing and round this flange a chain reminding of a blade chain of a motor saw has been attached. While sawing the blade chain moves round the blade flange and the blade flange makes a turning movement from one side of a tree to another side cutting the tree in a functional way. This is why the gripping point of the tree has been organized such that the blade of the sawing device reaches to cut all the tree trunks possible to be gathered between the gripping elements. Because the harvesting head includes also delimbing knives 9 in this application, there are drawing roll -type transporting elements 10 and 11 together with the gripping elements 2 in order to move the harvesting head while delimbing the tree. The delimbing knives 9 include also earlier recognized turning mechanism and an actuator (not illustrated in the figures 1-3) in order to turn the delimbing knives and pressing against the tree. All the functions in this application are hydraulic. Thus are various actuators needed for different functions hydraulic and their controlling equipment are guide valves. The guide valves are, in this application, electrically controlled magnetic valves and functions of various apparatus have been automatized to be carried out in functional order logically and in right time.

In the application in accordance with the figures 1-3 the stopper 4 represents a supporting part 5 attached movably perpendicularly in respect with the cutting direction of sawing device 3 (vertically, while the harvesting head is against the tree) to the frame 1 with attaching part 8. In order to move the supporting part there is an actuator 6 in the stopper, which is a multi-function hydraulic cylinder in this application. The actuator 6 has been attached to the attaching part 8 in the fixed end and to the upper end of the supporting part 5 in the moving end. Moving the moving end of the actuator the supporting part may be transported vertically in respect with the harvesting head in a functional way. The moving distance of the moving end of the actuator has been chosen such that while the moving end is in the upper position the base part 7 in the lower part of the supporting part is placed against the attaching part 8 and while the moving end is in the lower position the supporting part reaches a suitable distance below the blade of the sawing device. The base part 7 is a plate object which edge on the sawing device side (inner edge) has been designed in concave shape as illustrated in figures 1-3, which has been attached to the lower part of the supporting part 5. The size and the shape .of the base part has been defined such that it covers the area of the motion of the blade flange of the sawing device while the blade flange is placed outside the middle point of the distance between the gripping elements 10 and 11. Thus when the supporting part is in the lower position may the harvesting head not be placed so low that the blade flange of the sawing device may be placed below possible obstacles in the area of the base part.

The attaching part 8 functioning as the frame of the stopper has been formed of a tubelike part open in both ends and it is attached to the frame 1 of the harvesting head in a suitable way with attaching constructions manufactured of shaped plate objects. The supporting part 5 is adjusted almost without clearance by shape and by diameter to the tubelike part such that it may be adjusted inside the tubelike part vertically movable as explained earlier. For the attachment of the moving end of the actuator 6 there is a handle with a hole in the upper part of the supporting part to which the moving end has been attached turnable with a pivot suitable to the hole of the handle. The hydraulic cylinder functioning as an actuator is multifunctional and therefore the fixed cylinder part includes two hydraulic connections which have been connected to guide valves of the stopper attached elsewhere to the harvesting head. In this application the motions of supporting part are guided automatically with the guide valves on the grounds of functions of other equipment of the harvesting head.

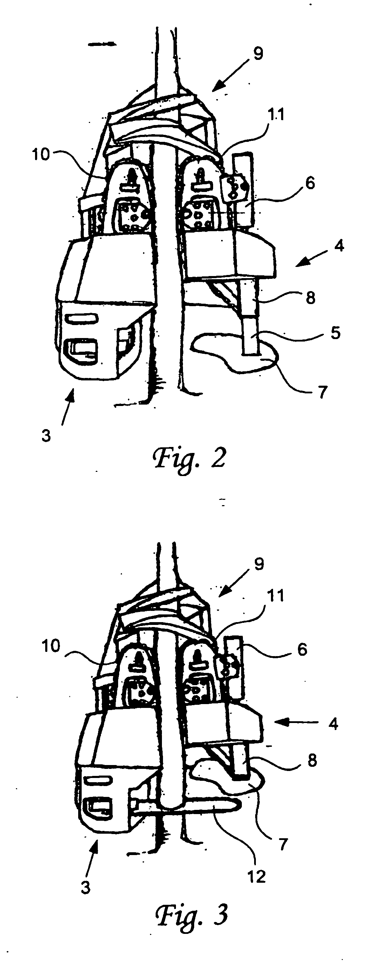

While felling a tree with a harvesting head in accordance with the figures 1-3 the harvesting head is moved by moving and/or turning the jointed boom of a multi-function machine near the butt of the tree to be felled. Next the gripping elements of the harvesting head are opened and so the guide valves of the stopper move the supporting part into the lower position. When the gripping elements have opened the harvesting head is placed against the tree such that the tree is placed in the middle of the gripping elements and the supporting part is clearly above the surface of the ground. Next the gripping elements are turned against the tree. After this the harvesting head is moved against the trunk downward by means of the transporting device of the gripping elements such that the base part of the supporting part is against the ground (as-illustrated in fig. 2). Then the harvesting head is at suitable height from the ground such that there may be no sawing to the ground or to an obstacle on the ground. Next the tree will be cut. The starting of the sawing device switches on the guide valve of the supporting part to lift the supporting part back to the upper position. While the supporting part has been lifted the blade chain of the saw will start and the blade flange makes the-sawing motion and the tree will be cut (as illustrated in fig. 3). To prevent from sawing to the supporting part the function of the guide valve realizing the motion of the blade flange has been prevented if the supporting part is not in the upper position. After sawing the sawing device will return to the starting position. After this the tree that has been cut may be turned, delimbed and cut with an ordinary harvesting head with delimbing knives. All the functions of the stopper in accordance with the figures 1-3 are carried out automatically without additional manual guiding functions. Therefore there is no need for separate control switches or some other control equipment in the cabin of the multi-function machine for the stopper.

The harvesting head in accordance with the invention which includes a stopper preventing from sawing to the ground may be realized differing in many ways from the application in accordance with the figures 1-3. Instead of the harvester-type harvesting head in the application in the figures 1-3 the earlier recognized part of the harvesting head may include, for example, only fixed gripping elements and a cutting saw or the harvesting head may be of harvester-type with barking knives after delimbing knives and/or with other additional device making it easier and quicker to process a tree.

The stopper of the harvesting head in accordance with the invention may also be another kind of a supporting part to be lowed down to the ground than that in the application in accordance with the figures 1-3. Instead of a supporting part to be moved vertically a supporting part to be turned down from the sides of the harvesting head or a diagonally movable supporting part may be used. The supporting part may include various base parts of different shapes or one stopper may include, for example, two or more supporting parts which are situated by some suitable means to different points of the motion area of the blade of the sawing device. The motion needed to lower the supporting part to the ground may naturally be realized instead of a hydraulic cylinder also by means of another kind of actuator. Those must not necessary be of linear motion or hydraulic. Furthermore, in some application to realize the motion some other actuator of the harvesting head may be used, such as the actuator of the turning device of the blade of the sawing device. Further, the control of the stopper and the control devices for it may be realized in many different ways. This is why the time of the occurrence of the motions of the supporting part may vary in various applications. In applications where there is no delimbing knives the supporting part may lower down already before gripping a tree. Furthermore, in that case it may be organized such that the supporting part rises up immediately after gripping a tree before the sawing device starts. Further, in some applications the lowering height of the harvesting head may be regulated by means of the length of the motion of the supporting part, for example, in cases if the height of the stumps after felling due to tree species, the roughness of the ground or for some other reason is wanted to vary.

The stopper for preventing from sawing to the ground of a harvesting head in accordance with the invention may, in principle, be supported also by other means than by a mechanical supporting part. To verify the distance to the ground or to obstacles in the ground, various probes for detecting distances, such as an ultrasound probe, optical measuring of distance or machine vision may be used. The disadvantages of this kind of stoppers are possible disturbances in the probes due to brushwood and corresponding obstacles in woods and the risk of the sensitive equipment of being damaged if not protected properly. Furthermore, while using this kind of non-touch stopper it must be made certain that their sphere of measuring covers the area size of which is the size of the motion of the blade around the sawing device such that it is certain that there are no obstacles on the area of motion of the blade as in the simple and reliable functioning application of a stopper.

The stopper in accordance with the invention may also be an intermediate form of different types of stoppers discussed in two earlier chapters, among other things. In that case the stopper may include, for example, flexibly to a harvesting head attached sensitive element reminding of a supporting part in the application in accordance with the figures 1-3 but essentially more light by construction. This kind of a sensitive element or its transporting element include some suitable probing, such as an inductive probe in order to indicate the touch to the ground. Furthermore, in case of this kind of a stopper there may be a suitable signalling device situated in the cabin of the forest machine transferring information about the position/state of the sensitive element of the stopper, such as a signal light or some other suitable display unit. This kind of a sensitive element -type stopper is especially suitable for machinery with a jointed boom and/or harvesting head of large size and heavy construction which otherwise would require a supporting part leaning to the ground to be build too big and heavy.

The invention is not limited to the presented advantageous application but it can vary within the frames of the idea of the invention formed in the claims.

## Claims

1. A harvesting head, with a frame (1) to which gripping elements (2) and a sawing device (3) are attached in order to cut tree trunks, wherein the harvesting head includes at least one, movable to the frame (1) attached stopper (4) in order to prevent the sawing device (3) from hitting the ground, **characterized in that** the stopper (4) includes a supporting part (5) to be lowered down and to be lifted back to the upper position for the duration of the sawing, and that the stopper (4) includes an actuator (6) to move the supporting part (5).

2. A harvesting head in accordance with claim 1, **characterized in that** the stopper (4) is to the opposite side of the sawing device (3) on the side of the frame (1).

3. A harvesting head in accordance with claims 1 or 2, **characterized in that** there is a base part (7) in the lower part of the supporting part (5) in order to support the supporting part against the ground.

4. A harvesting head in accordance with any of claims 1-3, **characterized in that** the stopper (4) includes an attaching part (8) in order to attach the stopper to the frame (1) of the harvesting head, and that the supporting part (5) is attached to the attaching part (8) movable mainly in vertical direction in respect with the harvesting head.

5. A harvesting head in accordance with any of claims 1-4, **characterized in that** the actuator (6) is an actuator of linear motion, such as a hydraulic cylinder, which is attached to the upper part of the attaching part (8), and that the moving end of the actuator (6) is attached to the upper part of the supporting part (5) in order to move the supporting part by means of the actuator.

6. A harvesting head in accordance with any of claims 1-5, **characterized in that** the harvesting head includes control elements in order to guide the motions of the actuator (6), and that the controls are organized to prevent the sawing device (3) from functioning, in case the supporting part (5) has not been moved away from the front of the sawing device (3) while cutting a tree.

7. A harvesting head in accordance with claim 6, **characterized in that** the actuator (6) is a multi-function hydraulic cylinder, and that the control elements are guide valves controlling the actuator according to the functioning of the sawing device (3).

## Patentansprüche

1. Erntekopf, mit einem Rahmen (1), an dem Greifelemente (2) und eine Sägevorrichtung (3) angebracht sind, um Baumstämme zu sägen, wobei der Erntekopf mindestens einen beweglich am Rahmen (1) angebrachten Anschlag (4) umfasst, um die Sägevorrichtung (3) daran zu hindern, auf den Boden zu treffen, **gekennzeichnet dadurch, dass** der Anschlag (4) ein Stützteil (5) umfasst, das für die Dauer des Sägens herabgesenkt und zurück in die obere Position gehoben wird, und dass der Anschlag (4) ein Stellglied (6) umfasst, um das Stützteil (5) zu bewegen.

2. Erntekopf nach Anspruch 1, **gekennzeichnet dadurch, dass** der Anschlag (4) an der Gegenseite der Sägevorrichtung (3) an der Seite des Rahmens (1) gelegen ist.

3. Erntekopf nach den Ansprüchen 1 oder 2, **gekennzeichnet dadurch, dass** es im Unterteil des Stützteils (5) ein Basisteil (7) vorhanden ist, um das Stützteil während des Sägens gegen den Boden abzustützen.

4. Erntekopf nach einem beliebigen der Ansprüche 1-3, **gekennzeichnet dadurch, dass** der Anschlag (4) einen Ansatz (8) umfasst, um den Anschlag an dem Rahmen (1) des Erntekopfs anzubringen, und dass das Stützteil (5) an dem Ansatz (8) vorwiegend in senkrechter Richtung in Bezug auf den Erntekopf beweglich befestigt ist.

5. Erntekopf nach einem beliebigen der Ansprüche 1 - 4, **gekennzeichnet dadurch, dass** das Stellglied (6) ein Stellglied für lineare Bewegung ist, wie zum Beispiel ein Hydraulikzylinder, der an dem Oberteil des Ansatzes (8) befestigt ist, und dass das sich bewegende Ende des Stellgliedes (6) an dem Oberteil des Stützteils (5) befestigt ist, um das Stützteil mittels des Stellgliedes zu bewegen.

6. Erntekopf nach einem beliebigen der Ansprüche 1 - 5, **gekennzeichnet dadurch, dass** der Erntekopf Steuerungselemente umfasst, um die Bewegungen des Stellgliedes (6) zu führen, und dass die Steuerungselemente organisiert sind, um die Sägevorrichtung (3) am Funktionieren zu hindern, falls das Stützteil (5) während des Sägens eines Baumes nicht von der Vorderseite der Sägevorrichtung (3) wegbewegt worden ist.

7. Erntekopf nach Anspruch 6, **gekennzeichnet dadurch, dass** das Stellglied (6) ein Mehrfunktionshydraulikzylinder ist, und dass die Steuerungselemente Führungsventile sind, die das Stellglied je nach Betrieb der Sägevorrichtung (3) kontrollieren.

## Revendications

1. Tête d'abattage, ayant une structure (1) à laquelle des éléments de serrage (2) et un dispositif de sciage (3) sont fixés afin de couper des troncs d'arbre, où la tête d'abattage inclut au moins un élément d'arrêt (4), mobile, fixé à la structure (1) afin d'empêcher le dispositif de sciage (3) d'heurter le sol, **caractérisée en ce que** l'élément d'arrêt (4) inclut un élément de support (5) qui doit être abaissé et soulevé de nouveau vers la position supérieure pendant toute la durée du sciage, et que l'élément d'arrêt (4) inclut un actionneur (6) pour déplacer l'élément de support (5).

2. Tête d'abattage selon la revendication 1, **caractérisée en ce que** l'élément d'arrêt (4) est placé au côté opposé du dispositif de sciage (3) sur le côté de la structure (1).

3. Tête d'abattage selon les revendications 1 ou 2, **caractérisée en ce qu'**une partie de base (7) se trouve dans la partie inférieure de l'élément de support (5) afin de supporter l'élément de support contre le sol pendant le sciage.

4. Bourrelet d'abattage selon l'une quelconque des revendications 1 à 3, **caractérisé en ce que** l'élément d'arrêt (4) inclut une partie de fixation (8) afin de fixer l'élément d'arrêt à la structure (1) de la tête d'abattage, et que l'élément de support (5) est fixé à la partie de fixation (8) mobile principalement en direction verticale par rapport à la tête d'abattage.

5. Bourrelet d'abattage selon l'une quelconque des revendications 1 à 4, **caractérisé en ce que** l'actionneur (6) est un actionneur de mouvement linéaire, comme un vérin hydraulique, qui est fixé à la partie supérieure de la partie de fixation (8), et que l'extrémité de mouvement de l'actionneur (6) est fixée à la partie supérieure de l'élément de support (5) afin de déplacer l'élément de support au moyen de l'actionneur.

6. Bourrelet d'abattage selon l'une quelconque des revendications 1 à 5, **caractérisé en ce que** la tête d'abattage inclut des éléments de contrôle afin de guider les mouvements de l'actionneur (6), et que les contrôles sont organisés de façon à empêcher le dispositif de sciage (3) de fonctionner, au cas où l'élément de support (5) n'a pas été éloigné de la partie antérieure du dispositif de sciage (3) pendant la coupe d'un arbre.

7. Tête d'abattage selon la revendication 6, **caractérisée en ce que** l'actionneur (6) est un vérin hydraulique multifonctions, et que les éléments de contrôle sont des tiroirs qui contrôlent l'actionneur selon le fonctionnement du dispositif de sciage (3).
